Europäisches Patentamt

(19) European Patent Office

Office européen des brevets

(11) EP 0 896 298 A2

(12) EUROPEAN PATENT APPLICATION

(43) Date of publication:
10.02.1999 Bulletin 1999/06

(51) Int. Cl.$^6$: G06T 3/00

(21) Application number: 98110565.3

(22) Date of filing: 09.06.1998

(84) Designated Contracting States:
AT BE CH CY DE DK ES FI FR GB GR IE IT LI LU
MC NL PT SE
Designated Extension States:
AL LT LV MK RO SI

(30) Priority: 12.06.1997 US 873493

(71) Applicant: Xerox Corporation
Rochester, New York 14644 (US)

(72) Inventors:
• Harrington, Steven J.
Webster, NY 14580 (US)
• Hembrock, Gwendolyn L.
Redondo Beach, CA 90277 (US)

(74) Representative:
Grünecker, Kinkeldey,
Stockmair & Schwanhäusser
Anwaltssozietät
Maximilianstrasse 58
80538 München (DE)

(54) Ram address generation for tetrahaedrische Interpolation über einen hexagonalen Verbund

(57) A memory for use in color space transformation by tetrahedral interpolation where, instead of using one large memory for the storage of the data table, four small memories are used, the memories being loaded and accessed so that each of the four data points needed for tetrahedral interpolation are always located in separate memories. This allows the four data points to be generated in parallel, thus increasing the speed of transformation without increasing the size of the memory. In the example described herein, the origin of the current cube in the data table is labeled $P_{000}$, and is loaded into one memory. Values $P_{100}$, $P_{010}$ and $P_{001}$ are loaded into a second table, values $P_{011}$, $P_{101}$ and $P_{110}$ are loaded into a third memory and value $P_{111}$ is loaded into a fourth table. Thus, any four values needed will be located in separate memories.

FIG. 1

## Description

### BACKGROUND OF THE INVENTION

A printer memory circuit for storing a table of conversion factors for transforming data from one color space to another by tetrahedral interpolation and, more specifically, a circuit having four separate memories arranged so that each of the four input values will always be loaded in separate memories, allowing fully parallel fetching of all four data points.

In the printing industry, it is frequently necessary to transform data from one color space to another. For example, scanners frequently produce red, green and blue (RGB) outputs, while color printers frequently print in cyan, yellow, magenta and black (CYMK), thus necessitating a color space conversion. For this example, a complete conversion takes four identical computations, one for each of CYM and K. For simplicity, this discussion will assume the cyan output case.

One commonly used transformation technique uses tetrahedral interpolation, which will be explained by the use of a numerical example. Assume a memory containing n by n by n words, where n = 17. If the data points are connected by orthogonal lines to form cubes there will be 16 x 16 x 16 cubes contained within the memory, each cube having a total of 8 data points located at its corners.

The memory is addressed by three numbers representing the three RGB values. For example, each number can have 5 most significant bits (msb's) which designate the integer portion and three least significant bits (lsb's) which represent a fractional value. Thus, the three integer portions will identify a cube, and the three fractional portions will represent the point within the identified cube that must be interpolated.

The interpolation algorithm then computes the output (cyan) value from 4 data points of the cube which define a tetrahedron, and the three fractional parts of the inputs. This basic process is described in U.S. Patent No. 4,275,413, Linear Interpolator for Color Correction, and is incorporated herein by reference.

The problem with this system is that it requires four memory cycles to fetch the four data points that are needed to do the interpolation. An alternative is to provide four separate memories so that the four data points can be output in parallel, but this would require four times the memory. A circuit that would use the same amount of memory but produce the four outputs in parallel would be an improvement.

### SUMMARY OF THE INVENTION

This invention is a circuit which consists of four separate memories, which will be referred to as A through D, each one-fourth the size of the single memory described above, and containing data arranged in such a way that it will be guaranteed that each of the four data points will always be in a different memory. The arrangement is as follows. Assume a single data block as described above. Label the X = Y = Z = 0 data point any letter, assume A. Then use a lettering sequence from that point in the X, Y and Z directions of B, C, D, A, B, C, D, A, etc. Continue this sequence throughout the entire data table. Now, any time that four points on the cube that define a tetrahedron are specified, one will be in a location labeled A, one in a location labeled B, one in a location labeled C, and one in a location labeled D. Assuming that all data points labeled A are in memory A, all points labeled B are in memory b, etc., then it is guaranteed that each of the four data points will always be in a separate memory, and all can be accessed in parallel.

The remaining problem is to decide which of the possible six tetrahedrons within the cube is to be used to provide the four (of 8) data points, which is to say, which of the tetrahedrons the point to be interpolated is located in. One way is to label the tetrahedrons 1 through 6 and apply comparisons to the fractional values (xf, yf and zf) of the RGB inputs. For example, if xf is greater than yf is greater than zf, then the interpolation point is in tetrahedron 1, which thereby identifies the four data points.

Using this system, all four of the data points for the interpolation calculation can be supplied in parallel without increasing the total amount of memory required.

### BRIEF DESCRIPTION OF THE DRAWINGS

Fig 1 shows how the data points of a cube are labeled.

Fig 2 shows how the entire data table is divided into a number of smaller memories which then can be accessed in parallel.

Fig 3 is a block diagram of the circuit.

Fig 4 is tetrahedron selector of Fig 3 shown in more detail.

Fig 5 a simplified schematic of the interpolator of Fig 3.

Fig 6 is a block diagram of a prior art single RAM circuit

Fig 7 is a block diagram of the dual RAM circuit.

Fig 8 is a block diagram of the quad RAM circuit.

**DETAILED DESCRIPTION OF THE INVENTION**

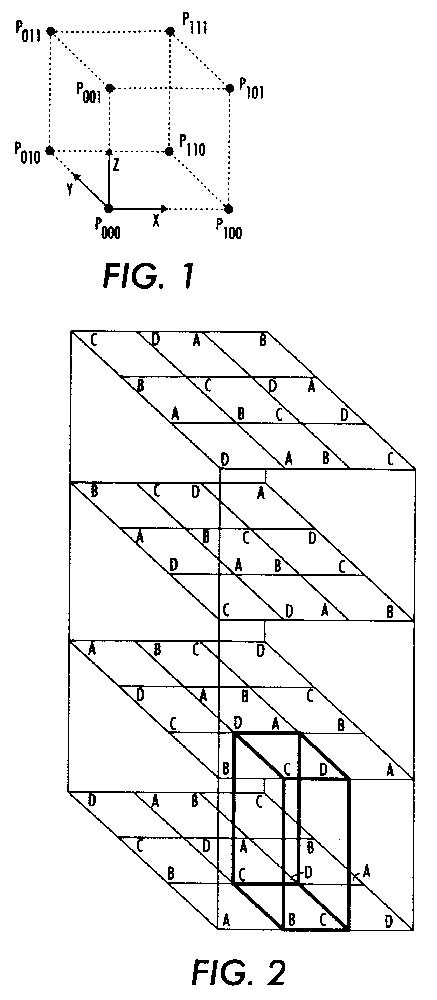

Fig 1 is the numbering system used in this discussion to identify the 8 corners of a cube of memory. Thus, $P_{000}$ is the starting point of the cube, $P_{100}$ is $P_{000+1}$ in the x direction, $P_{010}$ is $P_{000+1}$ in the y direction etc.

At this point it can be seen that once a starting point of a cube is designated as point $P_{000}$, then all possible next points must have a single "1" in the three least significant bits (lsb's), namely, $P_{100}$, $P_{010}$ and $P_{001}$. Similarly, the next possible points, $P_{011}$, $P_{101}$ and $P_{011}$ have two "1"s, and the final point, $P_{111}$, has three "1"s. Therefore, if four separate memories are provided and if all data points having the same number of "1"s are put in the same memory, then it is guaranteed that the 4 values will always be in different memories, and can be fetched in parallel.

These memories could be labeled A, B, C and D, and the data could be stored into each in accordance with the number of lsb "1"s. For example, for a given cube, if the data point with no "1"s is stored in memory B, then the three data points with a single "1" would be stored in C, the data points with two "1"s would be stored in memory D, and the data point with three "1"s would be stored in A. This would guarantee that the four data points would always be in different memories.

Fig 2 is a diagram showing how four memories would be used to store the values of data. This specific example is a diagram of a 3 x 3 x 3 cube section of the data table, having the cube of Fig 1 highlighted. Each intersection of orthogonal lines represents a data word in memory. Those labeled A are stored in memory A, those labeled B are stored in memory B, etc. As shown, the sequence A, B, C, D, A, B, C, D, A... proceeds from left to right, bottom to top and front to back throughout the data table. Putting Figs 1 and 2 together, for example, location $P_{000}$ of the highlighted cube of Fig 1 is stored in memory B. The ultimate result is that the 16 A values, $A_{000}$ through $A_{332}$, are loaded into memory A; 16 B values, $B_{100}$ through $B_{333}$ are loaded into memory B; 16 C values $C_{200}$ through $C_{330}$ are loaded into memory C; and 16 D values, $D_{300}$ through $D_{331}$, are loaded into memory D.

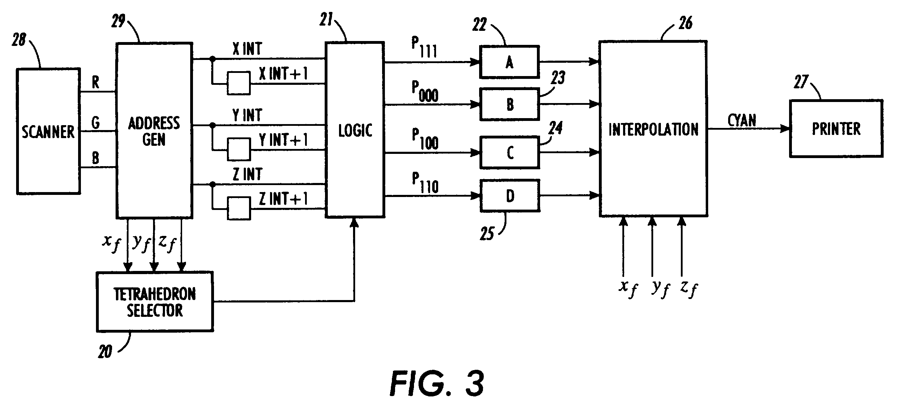

These four memories A 22 through D 25 are loaded and accessed as shown in Figs 2 and 3. First, the 64 data points are loaded into memories A 22 through D 25. Each data point is identified by x, y and z coordinates. The x, y and z terms are summed, modulo 4, and loaded as follows. If the sum, modulo 4, is 0, memory A is used; if the sum, modulo 4, is 1, memory B is used, etc.

To access the data, the RGB outputs of the scanner 28 are formed into memory addresses by address generator 29 into x, y and z addresses having an integer (int) part and a fractional (f) part. The three integer parts, and their incremented values, are input to the logic 21. The first task of the logic is to address the starting point, $P_{000}$, of the selected cube, and this is done simply by combining the x, y and z integer parts to form the $P_{000}$ address. Continuing to use the Example of Fig 1, The three integer parts will generate the address in memory B of the starting point of the current cube.

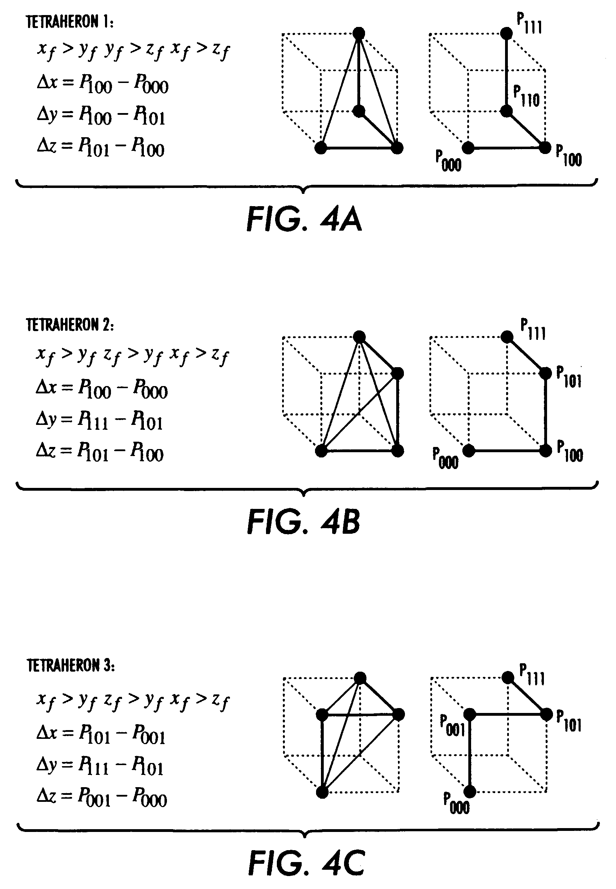

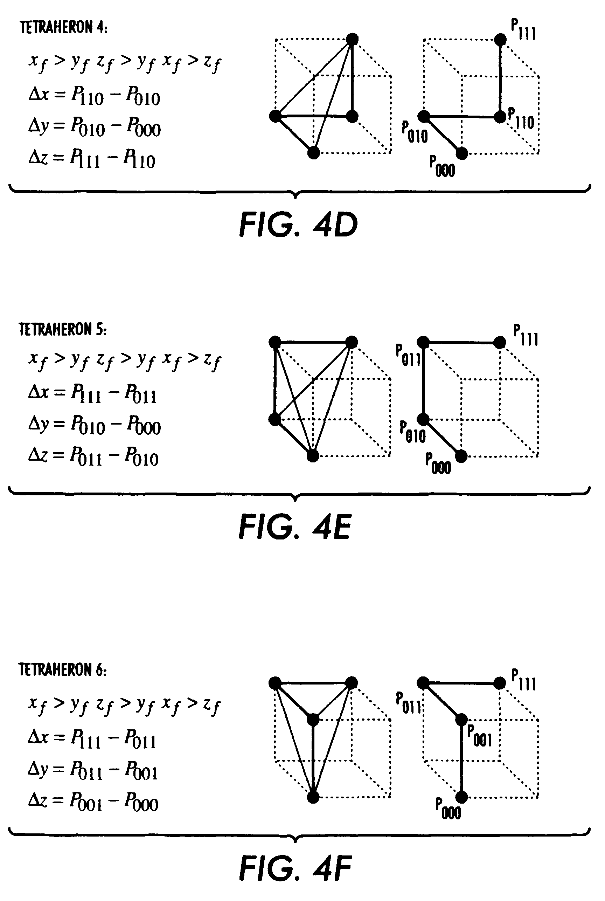

The other three (of seven remaining) points of the selected cube that are needed by the interpolation process are selected by the tetrahedron selector logic 20 as shown in Fig 4. All of the six processes of Fig 4 are similar, and therefore only Tetrahedron 1 will be explained. First, comparisons are made between the fractional parts of the three inputs. If xf is greater than yf is greater than zf, then the point to be interpolated is in tetrahedron 1, and the three other points to be used are $P_{100}$, $P_{110}$ and $P_{111}$. This is the example shown in Fig 3 where the outputs of logic 21 are $P_{111}$, $P_{000}$, $P_{100}$ and $P_{110}$. In terms of Fig 3, $P_{100}$ is the memory address that would be determined if $P_{000}$ were incremented in the x direction but not in y and z. Therefore, the $P_{100}$ output of the logic 21 is addressed by a combination of xint+1, yint and zint. The other two outputs are generated similarly.

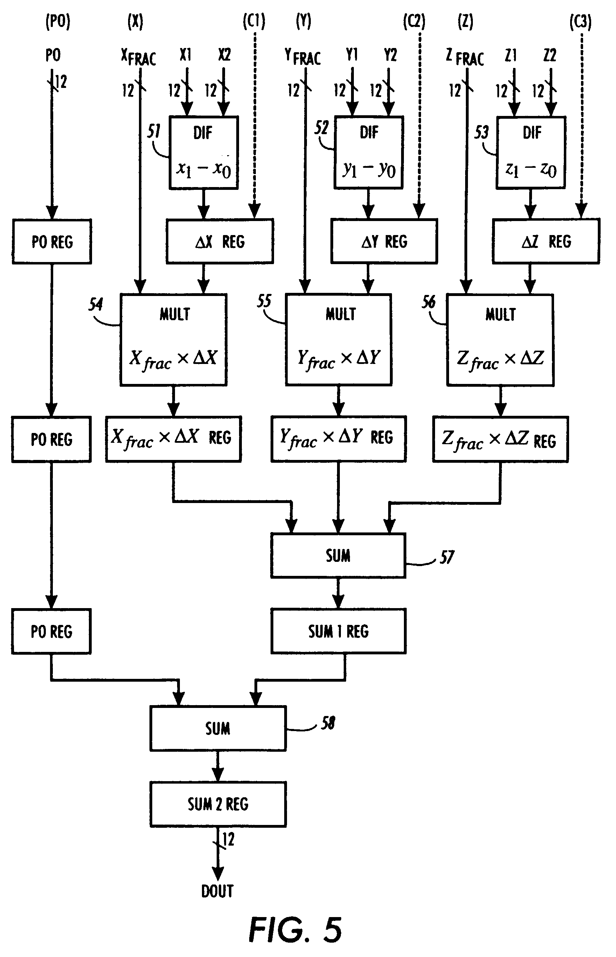

The four data points output by the memories 22 through 25 of Fig 3 are applied to an interpolation circuit 26 which is shown in more detail in Fig 5. Continuing to use the example of tetrahedron 1 of Fig 4, the data values obtained from the data points $P_{000}$ and $P_{100}$ in memory are subtracted at difference logic 51, multiplied by the fractional part of x and applied to the adder 57. Similarly, the difference between $P_{100}$ and $P_{110}$ is used for y and the difference between $P_{110}$ and $P_{111}$ is used for z. The result is then added at adder 58 to the value from memory at $P_{000}$ to generate the final value, for cyan in this example. The remaining registers in Fig 5 are for timing purposes.

The logic 21 of Fig 3 will now be described in more detail.

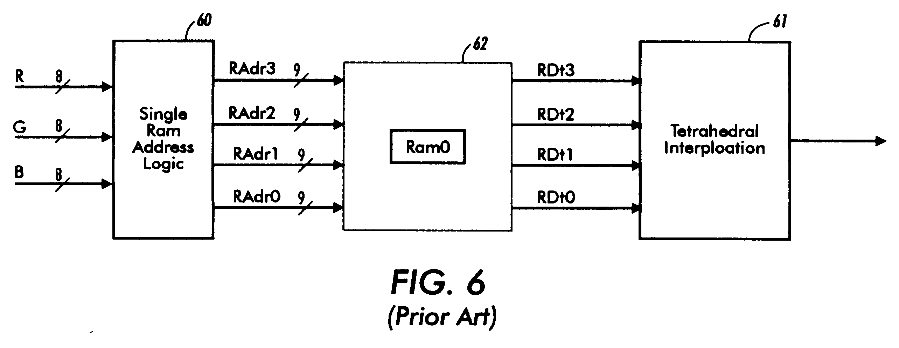

In the prior art, a single LUT (look up table) is used, as shown in Fig 6. As a numerical example, for a 512 entry LUT, the addresses output by logic 60 would be sequential and nine bits wide. The address would have the general form $x_2x_1x_0 \ y_2y_1y_0 \ z_2z_1z_0$. Then address 000 000 000 would be loaded as entry 0, address 000 000 001 would be entry 1, etc. In this case four sequential addresses must be used. The RGB inputs, assume 8 bits each, are applied to a single RAM address logic 60 to generate four addresses, each nine bits wide. These are used to address the LUT 62 four times to generate four data outputs which identify a tetrahedron. An interpolation step is then used in the interpolator 61 to form the final output, here assumed to be cyan.

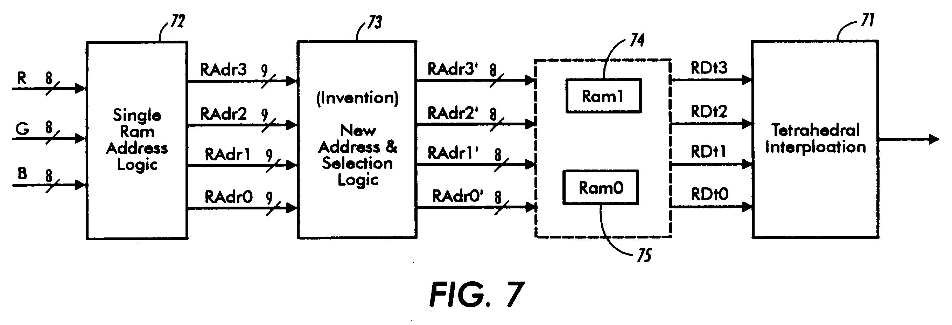

The memory can also be divided into two or four parts. As shown in Fig 7, the use of two look up tables, each half the size of a typical single table, allows the retrieval of RAM data in half the time. Thus, two cycles are required to output four data points. The RGB inputs to the address logic 72 result in four output addresses, each eight bits wide. These are generated in logic 73 so that two are applied to RAM 1 and two are applied to RAM 2. In two memory cycles, four outputs are generated.

Using the 512 single RAM address scheme defined by binary address $x_2x_1x_0 \ y_2y_1y_0 \ z_2z_1z_0$, the Fig 7 dual RAM logic 73 determines which of the two RAM's to use by determining the value of $r_0$, where $r_1 \ r_0 = x_0 + y_0 + z_0$. For example, if the Single RAM binary address was 000 010 101, then the equation would be 0+0+1=1, $r_0=1$, and RAM 1 would be used. Note that regardless of how many bits the single RAM address originally contains or the size of the single LUT, the same address bits as defined in the equation above will yield the information necessary to determine the RAM to use in this dual RAM case.

The method of loading the dual RAM's involves sequentially traversing every address of a single RAM (any size) and using the above described equation to determine the appropriate RAM to load the data into. As the single LUT is traversed, every entry at the current address location is the next to be sequentially stored in the dual RAM that has been determined by the equation shown above.

An example of a 256 entry dual LUT (based on a 512 single RAM configuration) is as follows. To generate the addresses for dual RAM's the least significant bit ($z_0$) is discarded.

| Binary Address | Dual RAM's | Data (from 512 entry single RAM) |
|---|---|---|
| $x_2x_1x_0 \ y_2y_1y_0 \ z_2z_1(z_0)$, | | |
| 000 000 00(0) | RAM 0 | entry 0 |
| 000 000 00(1) | RAM 1 | entry 1 |
| 000 000 01(0) | RAM 0 | entry 2 |
| . . . . . . . . | | |
| 111 111 11(1) | RAM 1 | entry 511 |

For retrieving data from the appropriate dual RAM, the result from the dual RAM selection equation together with the appropriate binary address (as example of previously described shows) are all that is required to download the pixel data needed for tetrahedral interpolation. To achieve maximum benefit from the address and RAM selection scheme described above, at least two of the four required addresses (the original versions prior to discarding of bits) must be generated simultaneously in hardware. This would be the equivalent to one clock time.

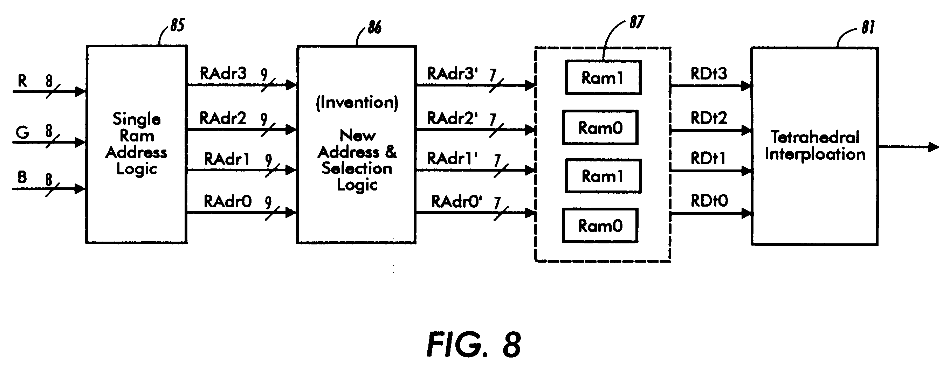

As shown in Fig 8, the use of four look up tables, each one quarter the size of a typical single table, allows the retrieval of RAM data in one quarter the time. This is the example shown in Fig 3. Thus, one cycle is required to output four data points. The RGB inputs to the address logic12 result in four output addresses, each seven bits wide. These are output from logic 86 so that one is applied to each of RAM's 0-3 in one memory cycle to generate four parallel outputs.

The quad RAM, like the single RAM, has sequential addresses, but the number of bits in each address is two bits less in the quad case. Another difference is in the number of entries per LUT. For example, in the case where a 512 entry single LUT would be used, its data equivalent in the quad LUT case would have 128 entries in each of four RAM's.

The address for each of four LUT's would be seven bits wide. The seven bits would be the most significant of the single RAM's 9 bit address, with the least significant two bits discarded. But, before discarding of any bit occurs, the address bits of the single RAM configuration have to be used to determine which quad RAM (RAM0 - RAM3) that pixel data will be loaded to and retrieved from.

Using the 512 single RAM address scheme defined by binary addresses $x_2x_1x_0$ $y_2y_1y_0$ $z_2z_1z_0$, quad RAM selection would be determined by the equation $x_1 x_0 + y_1 y_0 + z_1 z_0 = r_2 r_1 r_0$, and then $r_1 r_0$ would determine the RAM to be used. For example, if the single RAM binary address was 000 010 101, then the equation would be 00 + 10 + 11 = 111. In this case $r_1 r_0 = 11$, so RAM3 would be used here.

The following is an example of 128 entry LUT's (based on a 512 single RAM configuration). To generate the addresses for quad RAMS, the least significant address bits ($z_1 z_0$) are discarded.

| Binary Address | Quad RAM's | Data (from 512 entry single RAM) |
|---|---|---|
| $x_2x_1x_0$ $y_2y_1y_0$ $z_2(z_1z_0)$, | | |
| 000 000 0(00) | RAM0 | entry 0 |
| 000 000 0(01) | RAM1 | entry 1 |
| 000 000 0(10) | RAM2 | entry 2 |
| 000 000 0(11) | RAM3 | entry3 |
| . . . . . | | |
| 000 001 0(00) | RAM1 | entry 8 |
| 000 001 0(01) | RAM2 | entry 9 |
| 000 001 0(10) | RAM3 | entry 10 |
| 000 001 0(11) | RAM0 | entry 11 |
| . . . . . . | | |
| 111 111 1(00) | RAM2 | entry 508 |
| 111 111 1(01) | RAM3 | entry 509 |
| 111 111 1(10) | RAM0 | entry 510 |
| 111 111 1(11) | RAM1 | entry 511 |

**Claims**

1. A method of storing four data points to be used in tetrahedral interpolation into four separate memories, and for accessing the data points for transforming data from one color space to another comprising the steps of:

   A. loading the four data points into four memories so that each of the four points that describe each tetrahedron will be loaded into a different one of the memories, and

   B. accessing four values in parallel from the memories by:

   receiving three color values in a first color space,

   converting each value into an address having an integer part and a fractional part,

   using the integer parts to determine the location of a cube in the table,

   using the fractional parts to determine a tetrahedron in the cube, and

   accessing the values stored at the four corners of the tetrahedron for use in the interpolation.

2. The method of Claim 1 wherein the three color values are generated by a computer or scanner, the interpolation is used to generate a final color in a color space different from that of the original color values, and the final color is displayed in a visual form.

3. A method of storing four data points to be used in tetrahedral interpolation into two separate memories, and for accessing the data points for transforming data from one color space to another comprising the steps of:

   A. loading the four data points into two memories so that each two of four points that describe each tetrahedron will be loaded into a different one of the memories, and

   B. accessing the four values in two steps such that two values are accessed in parallel from the memories at each step by:

   receiving three color values in a first color space,

   converting each value into an address having an integer part and a fractional part,

   using the integer parts to determine the location of a cube in the table,

   using the fractional parts to determine a tetrahedron in the cube, and

   accessing the values stored at the four corners of the tetrahedron for use in the interpolation.

FIG. 1

FIG. 2

FIG. 3

SCANNER 28

ADDRESS GEN 29

TETRAHEDRON SELECTOR 20

LOGIC 21

INTERPOLATION 26

PRINTER 27

CYAN

$x_f$  $y_f$  $z_f$

R  G  B

$x_f$  $y_f$  $z_f$

X INT   X INT+1
Y INT   Y INT+1
Z INT   Z INT+1

$P_{111}$  A  22
$P_{000}$  B  23
$P_{100}$  C  24
$P_{110}$  D  25

TETRAHERON 1:

$x_f > y_f \ y_f > z_f \ x_f > z_f$

$\Delta x = P_{100} - P_{000}$

$\Delta y = P_{100} - P_{101}$

$\Delta z = P_{101} - P_{100}$

## FIG. 4A

TETRAHERON 2:

$x_f > y_f \ z_f > y_f \ x_f > z_f$

$\Delta x = P_{100} - P_{000}$

$\Delta y = P_{11} - P_{101}$

$\Delta z = P_{101} - P_{100}$

## FIG. 4B

TETRAHERON 3:

$x_f > y_f \ z_f > y_f \ x_f > z_f$

$\Delta x = P_{101} - P_{001}$

$\Delta y = P_{11} - P_{101}$

$\Delta z = P_{001} - P_{000}$

## FIG. 4C

TETRAHERON 4:

$x_f > y_f \; z_f > y_f \; x_f > z_f$

$\Delta x = P_{110} - P_{010}$

$\Delta y = P_{010} - P_{000}$

$\Delta z = P_{111} - P_{110}$

## FIG. 4D

TETRAHERON 5:

$x_f > y_f \; z_f > y_f \; x_f > z_f$

$\Delta x = P_{111} - P_{011}$

$\Delta y = P_{010} - P_{000}$

$\Delta z = P_{011} - P_{010}$

## FIG. 4E

TETRAHERON 6:

$x_f > y_f \; z_f > y_f \; x_f > z_f$

$\Delta x = P_{111} - P_{011}$

$\Delta y = P_{011} - P_{001}$

$\Delta z = P_{001} - P_{000}$

## FIG. 4F

*FIG. 5*

R 8

G 8

B 8

Single
Ram
Address
Logic

60

RAdr3 9

RAdr2 9

RAdr1 9

RAdr0 9

62

Ram0

RDt3

RDt2

RDt1

RDt0

61

Tetrahedral
Interploation

FIG. 6
(Prior Art)

EP 0 896 298 A2

*FIG. 7*

13

*FIG. 8*